# EUROPÄISCHE PATENTSCHRIFT

(11) **EP 2 025 953 B1**
(45) Veröffentlichungstag und Bekanntmachung des Hinweises auf die Patenterteilung: **04.05.2011**
(21) Anmeldenummer: 08162335.7
(22) Anmeldetag: 13.08.2008
(51) Int. Cl.: F16B 15/00

(54) **Nagelplatte, Holztragkonstruktion mit Nagelplatte und Verfahren zur Herstellung einer Nagelplatte**
Nail board, wooden carrier construction with nail board and method for producing a nail board
Plaque à clous, construction de support en bois dotée d'une plaque à clous et procédé de fabrication d'une plaque à clous

(30) Priorität: 14.08.2007 DE 102007038409
(43) Veröffentlichungstag der Anmeldung: 18.02.2009
(73) Patentinhaber: AGM Mader GmbH, 85221 Dachau (DE)
(72) Erfinder: Mader, Heinz B., 85221, Dachau (DE)
(74) Vertreter: Schober, Christoph D.

(56) Entgegenhaltungen:
- WO-A1-97/45647
- DE-A1- 2 606 666
- GB-A- 476 333

## Beschreibung

Die vorliegende Erfindung betrifft eine Nagelplatte, insbesondere zur Verbindung von Holzbauteilen, mit einer Tragplatte und einer Vielzahl von an der Tragplatte befestigten Nagelelementen. Ferner betrifft die Erfindung eine Holztragkonstruktion mit einer solchen Nagelplatte und ein Verfahren zur Herstellung einer solchen Nagelplatte.

Um im Holzbau auf einfache Weise mehrere Holzbauteile miteinander kraftschlüssig zu verbinden, werden im Bereich der Verbindungsstelle herkömmliche Nagelplatten beziehungsweise Nagelbinderplatten in die Holzbauteile eingepresst. Die Befestigung der Nagelplatten lässt sich am Einbauort selbst oder vorab im Rahmen der Herstellung vorgefertigter Bauteile durchführen. Beispielsweise können auf diese Weise Dachträger mit großen Stützweiten vorab gefertigt und anschließend nach Transport zur Einbaustelle schnell und einfach montiert werden. Derartige Nagelplattenverbindungen werden beispielsweise häufig beim Neubau von Industriebauten oder Gewerbegebäuden eingesetzt. Die Nagelplatten können derart montiert werden, dass sie von außen sichtbar oder unsichtbar sind.

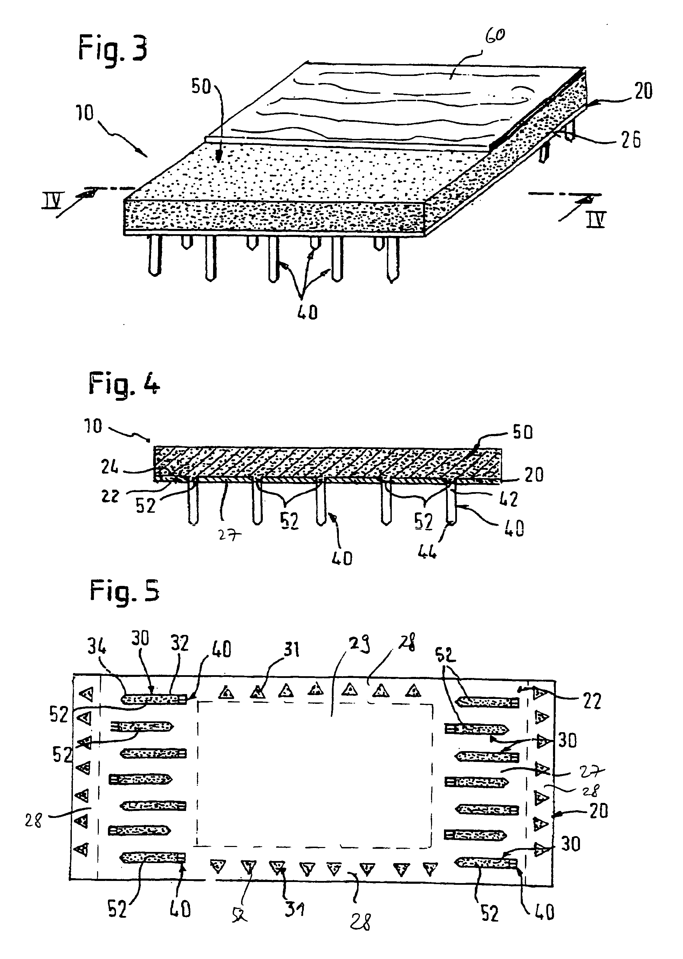

Die DE 26 06 666 A1 offenbart eine Nagelplatte zur Verbindung von Holzbauteilen mit einer Halteplatte, von der rechtwinklig Nägel abstehen, wobei die Nägel mit ihren Köpfen flächig an einer Metallplatte festgelegt sind. In Fig. 20 ist eine Ausführungsform der Nagelplatte gezeigt, bei der die Halteplatte senkrecht abstehende Nägel aufweist. Auf der Halteplatte ist ein Belag aus feuerbeständigem Material aufgebracht. Die Halteplatte ist in die Abdeckplatte aus feuerbeständigem Material eingebettet. Bei dem feuerbeständigen Material handelt es sich beispielsweise um eine Asbest-Zement-Platte, die im Falle eines Brandes die Halteplatte vor einer direkten Feuereinwirkung schützt. Die Abdeckplatte ist beispielsweise mit einem hitzebeständigen Kleber an der Halteplatte befestigt. Bei dem in Fig. 3 gezeigten Ausführungsbeispiel weist die metallische Halteplatte Öffnungen auf, durch welche sich Nagelschäfte erstrecken, wobei die Nagelköpfe durch eine Schicht, die beispielsweise aus einem feuerbeständigen Material bestehen kann, festgelegt sind.

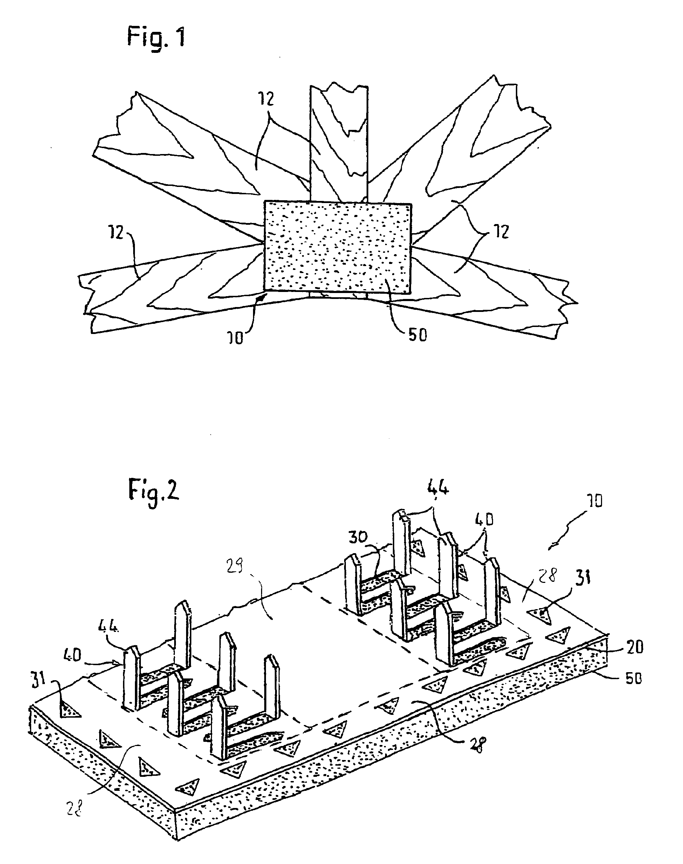

Die GB 476,333 betrifft einen mehrlagigen Aufbau, der gemäß Fig. 1 zwei äußere Lagen aus Holz und eine dazwischen befindliche Stahlplatte, die eine Vielzahl von Nägeln aufweist, umfasst. Bei der Ausführung gemäß Fig. 2 sind zwischen den beiden äußeren Lagen aus Holz zwei Stahlplatten und in der Mitte eine Lage aus Asbest, Kork, Gummi oder ähnlichem Material, wobei der Aufbau mittels der Nägel zusammengehalten wird. Die Stahlplatte weist in den Bereichen zwischen den Nägeln Öffnungen auf, durch die jeweils die Nägel der anderen Stahlplatte hindurch greifen.

Schließlich offenbart die WO 97/45647 A1 einen Bauteilverbinder mit zwei aneinandeliegenden Stahlplatten, von denen sich jeweils mehrere Nägel in Vertikalrichtung nach oben oder unten erstrecken, um zwei Holzbalken miteinander zu verbinden. Die Nagelelemente sind durch Ausstanzen und Umbiegen vorbestimmter Bereiche der Stahlplatten gebildet und werden durch die Öffnungen der jeweils anderen Nagelplatte hindurchgeführt, so dass die beiden Nagelplatten sich nicht gegenseitig verschieben können.

Insbesondere an den Außenseiten von Holzbauteilen angebrachte Nagelplatten haben den Nachteil, dass im Falle eines Brandes in vergleichsweise kurzer Zeit ein Totalversagen der Tragkonstruktion, wie beispielsweise einem Dachträger, eintritt. Dies liegt vor allem daran, dass bei einem Brand zunächst bei einer Temperatur bis etwa 250 °C die Hitze über die aus Stahlblech bestehende Nagelplatte und die Nagelelemente in das Holzbauteil eingeleitet wird und dort eine Verkohlung und anschließend eine Verkoksung der Holzbereiche um die einzelnen Nagelelemente herum bewirkt. Nach einem innerhalb weniger Minuten eintretenden Anstieg der Temperatur in einen Bereich von 600 °C bis 1000 °C erweicht die aus Stahlblech bestehende Nagelplatte, wodurch es zu einem plötzlichen Totalversagen der Holztragkonstruktion kommt.

Der Erfindung liegt die Aufgabe zugrunde, eine Nagelplatte und eine Holztragkonstruktion der eingangs genannten Art dahingehend zu verbessern, dass im Falle eines Brandes eine längere Standsicherheit erreicht werden kann. Ferner soll für die Nagelplatte ein zugehöriges Herstellverfahren angegeben werden.

Zur Lösung dieser Aufgabe wird eine Nagelplatte mit den Merkmalen gemäß Anspruch 1 vorgeschlagen.

Erfindungsgemäß weist die Tragplatte eine Vielzahl von Öffnungen auf, wobei in wenigstens eine Öffnung ein Vorsprung der Schutzplatte eingreift. Diese Öffnungen können unabhängig von den Nagelelementen in der Tragplatte gebildet sein oder aufgrund durch Ausstanzen und Umbiegen gebildeter Nagelelemente vorhanden sein. Infolge des wenigstens teilweisen Hineinragens des Vorsprunges in die Öffnung kann eine formschlüssige Verbindung zwischen Tragplatte und Schutzplatte erreicht werden. Als besonders vorteilhaft erweist es sich, wenn der Vorsprung in die wenigstens eine Öffnung eingepresst ist. Dies führt zu einer weiter verbesserten formschlüssigen Verbindung zwischen Schutzplatte und Tragplatte. Das Einpressen kann bereits im Rahmen der Herstellung der Schutzplatte erfolgen.

Durchgeführte Brandprüfungen haben gezeigt, dass eine Schutzwirkung, das heisst die Verhinderung des Eindringens von zündfähigen Temperaturen in das Holz, nur möglich ist, wenn die feuerhemmende Schicht entsprechend ausgebildet ist.

Da der Bereich des Holzes, der nicht durch eine Auflage geschützt ist, sofort zu brennen beginnt, ist es notwendig den Schutzbereich um den "Nagelbereich" zu erweitern. Dies wird vorzugsweise über die Schaffung nagelfreier Bereiche an den Rändern und im Mittelbereich der Tragplatte erreicht. Auf diese Weise wird über längere Zeit verhindert, dass ein Abbrand des Holzes unter der Tragplatte erfolgt.

Unter der Definition "feuerhemmend" soll die Schutzplatte im Sinne der vorliegenden Erfindung aus einem Baustoff, Werkstoff, Material beziehungsweise Zusammensetzung gebildet sein, der zumindest schwer entflammbar im Sinne der Klasse B1 der Norm DIN 4102 Teil 1 ist Gegebenenfalls kann die Schutzplatte auch die brandschutztechnisch höheren Anforderungen der Klasse A1 oder A2 erfüllen, das heisst beispielsweise auch aus nicht brennbarem Material gebildet sein. Vorzugsweise erfüllt eine derartige Schutzplatte auch zumindest die Anforderungen der Feuerwiderstandsklasse F30 oder die höheren Anforderungen der Feuerwiderstandsklassen F60 bis F180. Auf diese Weise kann die Holztragkonstruktion seine Funktion im Brandfall für mindestens 30 Minuten (Klasse F30) oder auch länger erfüllen.

In der Regel ist es aber bereits von großem Vorteil, wenn das Bauwerk wenigstens 30 Minuten insoweit tragfähig ist, dass darin befindliche Personen das Bauwerk verlassen beziehungsweise evakuiert werden können und mehr Zeit für Löschversuche besteht.

Die Schutzplatte kann auch als Brandschutzplatte oder Beschichtung bezeichnet werden und dient im Wesentlichen dazu, dass die Hitze nicht über die Tragplatte in die Nagelelemente und somit das Innere der Holzbauteile geleitet wird und dass die Tragplatte eine längere Widerstandsdauer erhält. Mit anderen Worten wird so eine Verkohlung oder Verkoksung im Inneren der Holzbauteile verhindert und die Erweichung der Tragplatte verhindert oder hinausgezögert.

Vorteilhafte Weiterbildungen der erfindungsgemäßen Nagelplatte sind Gegenstand der Ansprüche 2 bis 9.

Bei einer bevorzugten Ausführungsform ist die Schutzplatte aus einem Gefüge gebildet, das ein Bindemittel und ein Granulat aufweist, wobei das Granulat im Wesentlichen Fasern, Späne und/oder Pulver umfasst. Das Granulat kann beispielsweise auch Steinwolle umfassen. Zur Gefügeverbindung kann als Bindemittel ein Klebstoff verwendet werden. Die Herstellung der Schutzplatte erfolgt dabei durch Verpressen der Granulat-Bindemittel-Mischung.

Vorzugsweise umfasst das Granulat oder Gefüge Mineralfasern und/oder Holzfasern und/oder Holzspäne. Beispielsweise kann die Schutzplatte aus einer gepressten Faser und/oder Spanplatte gebildet sein. Derartige Baustoffe sind kostengünstig und vielfältig erhältlich. Vorteilhafterweise umfasst das Granulat im Wesentlichen oder vollständig Mineralfasern.

Bei einer weiteren bevorzugten Ausführungsform weist die Tragplatte eine Innenseite und eine Außenseite auf, wobei die Schutzplatte auf der Außenseite und/oder Innenseite vorgesehen ist. Unter der Innenseite wird vorliegend die den zu verbindenden Bauteilen zugewandte Seite und dementsprechend unter der Außenseite die den Bauteilen abgewandte Seite verstanden. Ferner kann die Tragplatte eine Seitenfläche aufweisen, die mit der Schutzplatte bedeckt ist. Bei der Seitenfläche handelt es sich vorzugsweise um die seitliche umlaufende Stirnfläche der Tragplatte. Um einen besonders hohen Brandschutz erreichen zu können, ist die Tragplatte allseitig mit der Schutzplatte versehen oder abgedeckt. Mit anderen Worten sind hierbei sämtliche Bereiche der Tragplatte mit der Schutzplatte ummantelt oder eingekapselt.

In bevorzugter Ausgestaltung weist die Schutzplatte eine Dicke von circa 1 mm bis circa 40 mm, vorzugsweise von circa 1 mm bis circa 20 mm auf. Vorzugsweise ist die Dicke der Schutzplatte auf die Dicke der Tragplatte und/oder die Länge der Nagelelemente abgestimmt. Vorteilhafterweise kann ein vorbestimmter Verhältniswert zwischen diesen einzelnen Bezugsgrößen festgelegt werden. Auf diese Weise können je nach statischen und/oder brandschutztechnischen Anforderungen an die Nagelplatte verschiedene Bausätze von Nagelplatten mit jeweils zugehöriger Schutzplatte zusammengestellt werden. Mit anderen Worten umfasst die Erfindung auch einen Bausatz von Bauteilen umfassend eine Tragplatte mit einer Vielzahl von Nagelelementen und eine zugehörige Schutzplatte. Eine derartige modulare Bauweise ist auch in Hinblick auf das Herstellverfahren von Vorteil. So kann mittels eines Werkzeuges eine großformatige Schutzplatte hergestellt und anschließend rasterartig zerteilt werden, beispielsweise in vorbestimmte, auf entsprechend zugehörige Nagelplattenabmessungen abgestimmte Standardabmessungen. Ferner kann eine solche Schutzplatte zunächst mit einer entsprechenden Tragplatte stoff- und/oder formschlüssig verbunden werden und dann die so gebildete großformatige Nagelplatte in einzelne Nagelplatten zerteilt werden.

Ferner kann die Schutzplatte mit einem Korrosionsschutz und/oder mit einem Farbstoff versehen beziehungsweise versetzt sein. So kann zugleich einem ausreichenden Korrosionsschutz oder zumindest einer Hemmung der Korrosion Rechnung getragen werden. Ferner kann auch den Anforderungen hinsichtlich moderner Architektur und deren optischer Betonung bestimmter Bauteile Rechnung getragen werden. Vorzugsweise kann hierzu ein Werkstoff eingesetzt werden, der die beiden Anforderungen hinsichtlich Korrosionsschutz und Farbgebung erfüllt.

Bei einer weiteren bevorzugten Ausgestaltungsform sind die Nagelelemente durch Ausstanzen und Umbiegen vorbestimmter Bereiche der Tragplatte gebildet. Alternativ oder zusätzlich dazu kann vorgesehen sein, dass Nagelelemente an der Tragplatte angeschweißt sind. Hinsichtlich der Anordnung der Nagelelemente können diese in Reihen angeordnet sein, wobei diese Reihen auch versetzt zueinander angeordnet werden können.

Bei einer weiteren bevorzugten Ausgestaltungsform sind die Nagelelemente so angeordnet, dass ein Mittelbereich der Tragplatte frei von Nagelelementen ist. Vorzugsweise ist die Fläche des nagelfreien Mittelbereichs größer als die Fläche des Bereiches, über den die Nagelelemente verteilt sind. Alternativ oder zusätzlich kann die Tragplatte einen oder mehrere Randstreifen oder Randzonen aufweisen, die frei von Nagelelementen sind. Vorzugsweise ist ein umlaufender Randstreifen frei von Nagelelementen. Vorteilhafterweise ist die Randzone und/oder der Mittelbereich mindestens so breit ist wie die Nägel lang sind.

Zur Lösung oben genannter Aufgabe wird ferner eine Holztragkonstruktion mit mindestens zwei Holzbauteilen vorgeschlagen, die mittels wenigstens einer Nagelplatte nach einem der Ansprüche 1 bis 9 miteinander verbunden sind.

Als weitere Lösung wird in Übereinstimmung mit Anspruch 11 ein Verfahren zur Herstellung einer Nagelplatte vorgeschlagen, insbesondere für die Verbindung von Holzbauteilen, wobei eine eine Vielzahl von Nagelelementen aufweisende Tragplatte formschlüssig und/oder stoffschlüssig mit einer Schutzplatte verbunden wird. Erfindungsgemäß wird die Schutzplatte derart auf die Tragplatte gedrückt, dass die Schutzplatte im Bereich wenigstens einer Öffnung der Tragplatte in die Öffnung hineingedrückt wird. Vorteilhafterweise wird die Schutzplatte im Bereich jeder Öffnung der Tragplatte in die jeweilige Öffnung eingepresst. Der Vorgang des Drückens erfolgt vorteilhafterweise durch Heißpressen.

Vorteilhafte Weiterbildungen des erfindungsgemäßen Verfahrens sind Gegenstand der Ansprüche 12 bis 13.

In vorteilhafter Weiterbildung werden die die Nagelelemente bildende Bereiche in die Tragplatte gestanzt und aus der Ebene der Tragplatte gebogen.

Ferner kann die Tragplatte in ein Werkzeug eingelegt und die Schutzplatte auf die den Nagelelementen abgewandten Aussenseite der Tragplatte zur Verbindung von Tragplatte und Schutzplatte gedrückt werden.

Nachfolgend wird die Erfindung unter Bezugnahme auf die Zeichnungen weiter erläutert. Dabei zeigen schematisch:
- Fig. 1: eine Holztragkonstruktion mit einer erfindungsgemäßen Nagel- platte mit Schutzplatte;
- Fig. 2, 3: perspektivische Darstellungen der Nagelplatte mit Schutzplatte gemäß Fig. 1;
- Fig. 4: einen Querschnitt durch die Nagelplatte mit Schutzplatte ge- mäß den Fig. 1 bis 3,
- Fig. 5: eine Ansicht von unten auf die Nagelplatte mit Schutzplatte gemäß den Fig. 1 bis 3, und
- Fig. 6: eine Ansicht von unten auf eine alternative Ausführungsform der Nagelplatte mit Schutzplatte.

Fig. 1 zeigt eine Holztragkonstruktion, wobei zur Verbindung von fünf Holzbauteilen 12 eine erfindungsgemäße Nagelplatte in die Holzbauteile 12 eingepresst ist. Die Fig. 2 bis 5 zeigen sodann diese Nagelplatte 10 im Detail mittels verschiedener Ansichten.

Wie aus den Fig. 2 und 3 hervorgeht, umfasst die Nagelplatte 10 eine Tragplatte 20 mit einer Vielzahl von an der Tragplatte 20 befestigten Nagelelementen 40, die in Reihen benachbart zueinander angeordnet sind. Die einzelnen Reihen sind so angeordnet, dass sie nur an zwei seitlichen Bereichen (Nagelzonen) vorgesehen sind. Ein Mittelbereich 29 der Tragplatte 20 und ein Seitenbereich 28 in Form eines Randstreifens der Tragplatte 20 sind frei von Nagelelementen 40.

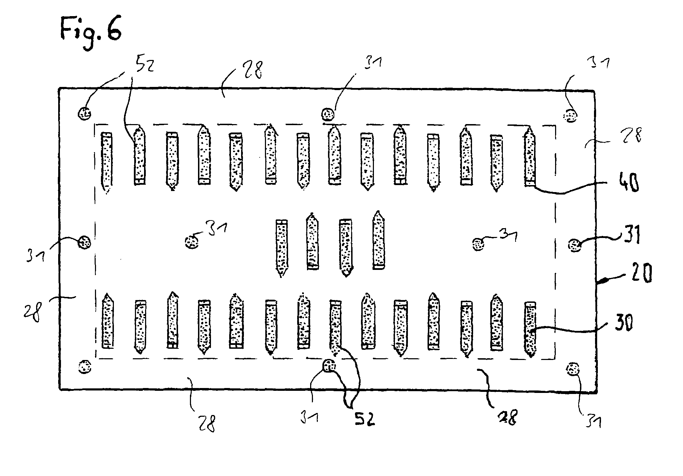

Sämtliche Nagelelemente 40 sind durch Ausstanzen und Umbiegen vorbestimmter Bereiche der Tragplatte 20 gebildet. Im gezeigten Ausführungsbeispiel sind die Nagelelemente 40 in einem Winkel von etwa 90° zur Ebene der Tragplatte 20 ausgerichtet und haben eine Länge von etwa 10 bis etwa 20 mm. Je nach Anwendungsfall kann der Winkel und die Länge auch variieren, beispielsweise auch nur für bestimmte Gruppen oder Reihen von Nagelelementen 40 (siehe Fig. 5, 6). Alternativ oder zusätzlich könnten die Nagelelemente 40 an der Tragplatte 20 angeschweißt sein.

Die sich bei der Herstellung der Nagelelemente 40 durch das Stanzen und Umbiegen wenigstens eines Abschnittes des späteren Umrisses des jeweiligen Nagelelements 40 ergebenden Öffnungen 30 weisen ein erstes Ende 32 und ein zweites Ende 34 auf (siehe Fig. 5). An das erste Ende 32 schliesst jeweils das Nagelement 40 an. Das zweite Ende 34 ist etwa dreiecksförmig ausgebildet. Die Umrandung der Öffnung 30 wird im Wesentlichen durch ein Stanzwerkzeug festgelegt. Das Nagelelement 40 hat ein erstes Ende 42, das mit der Tragplatte 20 verbunden ist und ein zweites freies Ende 44. Das freie Ende 44 ist entsprechend dem zweiten Ende 34 der Öffnung 30 etwa dreiecksförmig ausgebildet. Dadurch können die Nagelelemente 40 einfacher in die Holzbauteile 12 eingepresst werden. Zwischen den Öffnungen 30 bilden verbleibende Plattenbereiche 27 der Tragplatte 20 quasi Stege oder Streifen, die im eingebauten zur Kraftübertragung zwischen den Holzbauteilen 12 dienen. Ferner umfasst die Tragplatte 20 eine Innenseite 22, eine Außenseite 24 und eine Seitenfläche 26. Die Innenseite 22 ist im montierten Zustand der Nagelplatte 10 den Holzbauteilen 12 zugewandt. Dementsprechend ist die Außenseite 24 den Holzbauteilen 12 abgewandt. Die Seiten- oder Stirnfläche 26 verläuft in Umfangsrichtung der Tragplatte 20 umlaufend.

Wie sich aus den Figuren 2 bis 4 ergibt, liegt auf der Außenseite 24 der Tragplatte 20 eine wenigstens feuerhemmende Schutzplatte 50 auf und ist formschlüssig mit der Tragplatte 20 verbunden. Die Schutzplatte 50 weist eine Dicke von ca. 1 mm bis 20 mm, vorzugsweise von ca. 5 mm bis 10 mm, auf und ist aus einem aus Mineralfasern sowie Klebstoff als Bindemittel umfassenden Gefüge gebildet. Diese Schutzplatte 50 kann auch als Brandschutzplatte bezeichnet werden und erfüllt mindestens die an die Feuerwiderstandsklasse F30 gestellten Anforderungen, das heisst sie hält in einem Brandfall wenigstens 30 Minuten stand.

Wie den Fig. 2, 4 und 5 zu entnehmen, weist die Schutzplatte 50 im Bereich jeder Öffnung 30 der Tragplatte 20 einen Vorsprung 52 auf, der zur formschlüssigen Verbindung von Schutzplatte 50 und Tragplatte 20 in die jeweilige Öffnung 30 hineinragt beziehungsweise eingreift. Der jeweilige Vorsprung 52 kann eine Höhe aufweisen, die kleiner als, größer als oder gleich der Tiefe der zugehörigen Öffnung 30 ist. In Fig. 2 ist die Höhe der Vorsprünge geringfügig kleiner als die Tiefe der Öffnung 30 oder entspricht im Wesentlichen der Tiefe der Öffnung 30.

Zusätzlich kann die Tragplatte 20 mit weiteren Öffnungen 31 versehen sein. Vorzugsweise sind diese Öffnungen 31 in einem Seitenbereich 28 und/oder in einem Mittelbereich 29 in die Tragplatte 20 eingebracht. Die Öffnungen 31 sind ebenfalls durch Ausstanzen gebildet. In die Öffnungen 31 greifen wiederum Vorsprünge 52 der Schutzplatte 50 ein, um eine formschlüssige Verbindung zu erzielen. Vorteilhafterweise sind die Vorsprünge 52 in die Öffnungen 31 eingepresst.

Weiterhin kann die Schutzplatte 50 zusätzlich oder alternativ mit der Tragplatte 20 stoffschlüssig verbunden sein. Dies kann vollflächig oder abschnittsweise erfolgen. Weiterhin kann die Schutzplatte 50 mit einer korrosionsbeständigen oder korrosionshemmenden Schutzschicht und/oder einem Farbstoff versehen sein.

Zur Herstellung der bausatzartig aus Tragplatte 20 mit Nagelelementen 40 und Schutzplatte 50 zusammengesetzten Nagelplatte 10 wird die Tragplatte 20 formschlüssig und/oder stoffschlüssig mit der Schutzplatte 50 verbunden.

Hierzu werden vorab die bereits oben erwähnten vorbestimmten Bereiche der Tragplatte 20 soweit erforderlich gestanzt und die gestanzten Bereiche zur Bildung der Nagelelemente 40 aus der Ebene der Tragplatte 20 gebogen.

Sodann wird die Tragplatte 20 in ein Werkzeug eingelegt und anschließend die Schutzplatte 50 derart auf die Außenseite 24 der Tragplatte 20 gedrückt beziehungsweise gepresst, dass die formschlüssige und/oder stoffschlüssige Verbindung zwischen Tragplatte 20 und Schutzplatte 50 entsteht. Beispielsweise kann bei einem Heißpressen unter Verwendung eines Bindemittels eine stoffschlüssige Verbindung erzielt werden.

Bei diesem Pressvorgang wird ausreichender Druck eingesetzt, so dass die Schutzplatte 50 im Bereich vorzugsweise aller Öffnungen 30 und 31 in die jeweilige Öffnung 30 bzw. 31 hineingedrückt beziehungsweise hineingepresst wird. Auf diese Weise kommt es zu einer formschlüssigen Verbindung zwischen Tragplatte 20 und Schutzplatte 50, so dass grundsätzlich auf eine zusätzliche stoffschlüssige Verbindung verzichtet werden kann.

Die derart gebildete Nagelplatte 10 ist mit ihrer Tragplatte 20 somit auf der im Brandfall herkömmlicherweise feuerbeaufschlagten Außenseite mit der feuerhemmenden Schutzplatte 50 versehen, wobei die Verbindung von Schutzplatte 50 und Tragplatte 20 im Brandfall zumindest für einen längeren Zeitraum erhalten bleibt. So kann im Brandfall wertvolle Zeit für das Verlassen oder Evakuieren eines Gebäudes sowie für die Löscharbeiten gewonnen wird.

Die vorbeschriebene geschützte Nagelplatte 10 lässt sich beispielsweise für die in Fig. 1 gezeigte Holztragkonstruktion zur Verbindung der Holzbauteile 12 verwenden.

In einer weiteren Ausführungsform (nicht dargestellt) kann zusätzlich zur Außenseite 24 auch die Seitenfläche 26 mit der Schutzplatte 50 oder einem separaten Schutzplattenstreifen aus dem gleichen Werkstoff wie die Schutzplatte 50 abgedeckt oder bedeckt werden. Diese Verkleidung der Seitenfläche 26 kann beispielsweise auch durch das Aufdrücken beziehungsweise Aufpressen der Schutzplatte 50 erzielt werden. Um diese Abdeckung der Seitenflächen 26 zu erreichen, werden die Plattenabmessungen der Schutzplatte 50 mit einem ausreichenden Übermaß, d.h. mit größeren Abmessungen als die Plattenabmessungen der Tragplatte 20 bereitgestellt.

Fig. 6 zeigt eine weitere Ausführungsform der Nagelplatte 10, bei der drei Reihen von Nagelelementen 40 und die zugehörigen Öffnungen 30 vorgesehen sind. In dem Seitenbereich 28 in Form eines umlaufenden Randstreifens sind mehrere Öffnungen 31 vorgesehen. In den Öffnungen 30 und 31 befinden sich die Vorsprünge 52, die durch das Aufpressen der Schutzplatte 50 in die Öffnungen 30, 31 zur formschlüssigen Verbindung von Schutzplatte 50 und Tragplatte 20 hineingepresst sind.

Wie Fig. 3 zu erkennen gibt kann bei allen Ausführungsformen zum Schutz der Faserschicht der Schutzplatte 50 eine Abdeckung 60 vorgesehen sein. Die Abdeckung 60 kann als Dekorschicht ausgeführt sein, beispielsweise in Form eines Furniers.

### Bezugszeichenliste

- 10: Nagelplatte
- 12: Holzbauteil

- 20: Tragplatte
- 22: Innenseite
- 24: Aussenseite
- 26: Seitenfläche
- 27: Plattenbereich
- 28: Seitenbereich
- 29: Mittelbereich

- 30: Öffnung
- 31: Öffnung
- 32: erstes Ende
- 34: zweites Ende

- 40: Nagelelement
- 42: erstes Ende
- 44: zweites Ende

- 50: Schutzplatte
- 52: Vorsprung

- 60: Abdeckung

## Patentansprüche

1. Nagelplatte (10), insbesondere zur Verbindung von Holzbauteilen (12), mit einer Tragplatte (20) und einer Vielzahl von an der Tragplatte (20) befestigten Nagelelementen (40), und einer feuerhemmenden Schutzplatte (50), die formschlüssig und/oder stoffschlüssig mit der Tragplatte (20) verbunden ist, **dadurch gekennzeichnet, dass** die Tragplatte (20) eine Vielzahl von Öffnungen (30, 31) aufweist, wobei in wenigstens eine Öffnung (30, 31) ein Vorsprung (52) der Schutzplatte (50) eingreift.

2. Nagelplatte (10) nach Anspruch 1, **dadurch gekennzeichnet, dass** der Vorsprung (52) in die Öffnung (30, 31) eingepresst ist.

3. Nagelplatte (10) nach Anspruch 1 oder 2, **dadurch gekennzeichnet, dass** die Schutzplatte (50) aus einem Gefüge gebildet ist, das ein Bindemittel und ein Granulat aufweist, wobei das Granulat im Wesentlichen Fasern, Späne und/oder Pulver umfasst.

4. Nagelplatte (10) nach Anspruch 3, **dadurch gekennzeichnet, dass** das Granulat Holzfasern, Holzspäne und/oder Mineralfasern umfasst.

5. Nagelplatte (10) nach einem der Ansprüche 1 bis 4, **dadurch gekennzeichnet, dass** die Tragplatte (20) eine Innenseite (22) und eine Aussenseite (24) aufweist, wobei die Schutzplatte (50) auf der Aussenseite (24) und/oder Innenseite (22) vorgesehen ist.

6. Nagelplatte (10) nach einem der Ansprüche 1 bis 5, **dadurch gekennzeichnet, dass** die Tragplatte (20) eine Seitenfläche (26) aufweist, die mit der Schutzplatte (50) bedeckt ist.

7. Nagelplatte (10) nach einem der Ansprüche 1 bis 6, **dadurch gekennzeichnet, dass** die Schutzplatte (50) eine Dicke von circa 1 mm bis circa 40 mm, vorzugsweise von circa 1 mm bis circa 20 mm, aufweist.

8. Nagelplatte (10) nach einem der Ansprüche 1 bis 7, **dadurch gekennzeichnet, dass** die Nagelelemente (40) durch Ausstanzen und Umbiegen vorbestimmter Bereiche der Tragplatte (20) gebildet sind und/oder dass die Nagelelemente (40) an der Tragplatte (20) angeschweißt sind.

9. Nagelplatte (10) einem der Ansprüche 1 bis 8, **dadurch gekennzeichnet, dass** ein Mittelbereich und/oder ein Randstreifen der Tragplatte (20) frei von Nagelelementen ist.

10. Holztragkonstruktion mit mindestens zwei Holzbauteilen (12), die mittels wenigstens einer Nagelplatte (10) nach einem der Ansprüche 1 bis 9 miteinander verbunden sind.

11. Verfahren zur Herstellung einer Nagelplatte (10), insbesondere für die Verbindung von Holzbauteilen (12), wobei eine, eine Vielzahl von Nagelelementen und eine Vielzahl von Öffnungen (30) aufweisende Tragplatte (20) formschlüssig und/oder stoffschlüssig mit einer Schutzplatte (50) verbunden wird, **dadurch gekennzeichnet, dass** die Schutzplatte (50) derart auf die Tragplatte (20) gedrückt wird, dass die Schutzplatte (50) im Bereich wenigstens einer Öffnung (30, 31) der Tragplatte (20) in die Öffnung (30, 31) hineingedrückt wird.

12. Verfahren nach Anspruch 11, **dadurch gekennzeichnet, dass** die die Nagelelemente (40) bildende Bereiche der Tragplatte (20) gestanzt und aus der Ebene der Tragplatte (20) gebogen werden.

13. Verfahren nach Anspruch 11 oder 12, **dadurch gekennzeichnet, dass** die Tragplatte (20) in ein Werkzeug eingelegt und die Schutzplatte (50) auf die den Nagelelementen (40) abgewandte Aussenseite der Tragplatte (20) zur Verbindung von Tragplatte (20) und Schutzplatte (50) gedrückt wird.

## Claims

1. Nail plate (10), in particular for the connection of wooden construction components (12), with a support plate (20) and a number of nail elements (40) attached to the support plate (20) and a fire-retardant protection plate (50) which is bonded and/or positively connected to the support plate (20) **characterized in that** the support plate (20) has a number of openings (30, 31) wherein a projection (52) of the protection plate (50) engages in at least one opening (30, 31).

2. Nail plate (10) according to claim 1 **characterised in that** the projection (52) is pressed into the opening (30, 31).

3. Nail plate (10) according to claim 1 or 2 **characterised in that** the protection plate (50) is composed of a structure having an adhesive agent and a granulate material wherein the granulate material consists essentially of fibres, chips and/or powders.

4. Nail plate (10) according to claim 3 **characterised in that** the granulate material comprises wood fibres, wood chips and/or mineral fibres.

5. Nail plate (10) according to one of the claims 1 to 4 **characterised in that** the support plate (20) has an inner surface (22) and an outer surface (24), wherein the protection plate (50) is provided on the outer surface (24) and/or on the inner surface (22).

6. Nail plate (10) according to one of the claims 1 to 5 **characterised in that** the support plate (20) has a side surface (26) which is covered by the protection plate (50).

7. Nail plate (10) according to one of the claims 1 to 6 **characterised in that** the protection plate (50) has a thickness from about 1 mm. to about 40mm., preferably from about 1 mm. to about 20mm.

8. Nail plate (10) according to one of the claims 1 to 7 **characterised in that** the nail elements (40) are formed by punching out and bending predetermined areas of the support plate (20) and/or that the nail elements (40) are welded to the support plate (20).

9. Nail plate (10) according to one of the claims 1 to 9 **characterised in that** an area in the centre and/or an area around the edge of the support plate (20) is free from nail elements.

10. Wooden bearer construction having at least two wooden construction components (12) connected by at least one nail plate (10) according to one of the claims 1 to 9.

11. Method for producing a nail plate (10) in particular for the connection of wooden construction components (12) wherein a support plate (20) having a number of nail elements and a number of openings (30, 31) is bonded and/or connected positively with a protection plate (50) **characterised in that** the protection plate (50) is pressed onto the support plate (20) such that the protection plate (50) is pressed into the opening (30, 31) in the location of at least one opening (30, 31) in the support plate (20).

12. Method according to claim 11 **characterised in that** the areas of the support plate (20) which form the nail elements (40) are punched out and bent out from the level surface of the support plate (20).

13. Method according to claim 11 or 12 **characterised in that**, to connect the support plate (20) and the protection plate (50), the support plate (20) is inserted into a tool and the protection plate (50) is pressed onto the outer surface of the support plate (20) that is remote from the nail elements (40).

## Revendications

1. Plaque à clous (10), en particulier pour la liaison de pièces de construction en bois (12), comprenant une plaque porteuse (20) et une pluralité d'éléments formant clous (40) fixés sur la plaque porteuse (20), et une plaque de protection (50) ignifuge qui est reliée à la plaque porteuse (20) par coopération de formes et/ou par coopération de matières, **caractérisée en ce que** la plaque porteuse (20) comporte une pluralité d'ouvertures (30, 31), une saillie (52) de la plaque de protection (50) s'engageant dans au moins une ouverture (30, 31).

2. Plaque à clous (10) selon la revendication 1, **caractérisée en ce que** la saillie (52) est enfoncée à la presse dans l'ouverture (30, 31).

3. Plaque à clous (10) selon la revendication 1 ou 2, **caractérisée en ce que** la plaque de protection (50) est formée par une structure qui comprend un liant et un granulé, le granulé incluant essentiellement des fibres, des copeaux et/ou de la poudre.

4. Plaque à clous (10) selon la revendication 3, **caractérisée en ce que** le granulé comprend des fibres de bois, des copeaux de bois et/ou des fibres minérales.

5. Plaque à clous (10) selon l'une des revendications 1 à 4, **caractérisée en ce que** la plaque porteuse (20) comporte une face intérieure (22) et une face extérieure (24), la plaque de protection (50) étant prévue sur la face extérieure (24) et/ou sur la face intérieure (22).

6. Plaque à clous (10) selon l'une des revendications 1 à 5, **caractérisée en ce que** la plaque porteuse (20) comporte une surface latérale (26) qui est recouverte avec la plaque de protection (50).

7. Plaque à clous (10) selon l'une des revendications 1 à 6, **caractérisée en ce que** la plaque de protection (50) présente une épaisseur d'environ 1 mm à environ 40 mm, de préférence d'environ 1 mm à environ 20 mm.

8. Plaque à clous selon l'une des revendications 1 à 7, **caractérisée en ce que** les éléments formant clous (40) sont formés par poinçonnage et repliage de région prédéterminée de la plaque porteuse (20) et/ou en ce que les éléments formant clous (40) sont soudés sur la plaque porteuse (20).

9. Plaque à clous (10) selon l'une des revendications 1 à 8, **caractérisée en ce qu'**une région médiane et/ou une bande de bordure de la plaque porteuse (20) est dépourvue d'éléments formant clous.

10. Construction porteuse en bois comprenant au moins deux pièces de construction en bois (12) qui sont reliées l'une à l'autre au moyen d'au moins une plaque à clous (10) selon l'une des revendications 1 à 9.

11. Procédé pour la fabrication d'une plaque à clous (10), en particulier pour la liaison de pièces de construction en bois (12), dans lequel une plaque porteuse (20) qui comporte une pluralité d'éléments formant clous et une pluralité d'ouvertures (30) est reliée par coopération de formes et/ou par coopération de matières à une plaque de protection (50), **caractérisé en ce que** la plaque de protection (50) est pressée sur la plaque porteuse (20) de telle façon que, dans la région d'au moins une ouverture (30, 31) de la plaque porteuse (20), la plaque de protection (50) est enfoncée dans l'ouverture (30, 31).

12. Procédé selon la revendication 11, **caractérisé en ce que** les régions de la plaque porteuse (20) qui forment les éléments formant clous (40) sont poinçonnées et repliées hors du plan de la plaque porteuse (20).

13. Procédé selon la revendication 11 ou 12, **caractérisé en ce que** la plaque porteuse (20) est mise en place dans un outillage, et la plaque de protection (50) est pressée sur la face extérieure, détournée des éléments formant clous (40), de la plaque porteuse (20) pour la liaison de la plaque porteuse (20) et de la plaque de protection (50).
